(19) **Europäisches Patentamt / European Patent Office / Office européen des brevets**

(11) **EP 4 629 150 A1**

(12) # EUROPEAN PATENT APPLICATION

(43) Date of publication:
**08.10.2025 Bulletin 2025/41**

(21) Application number: **24168837.3**

(22) Date of filing: **05.04.2024**

(51) International Patent Classification (IPC):
**G06Q 20/02** (2012.01)    **G06Q 20/06** (2012.01)
**H04L 9/00** (2022.01)

(52) Cooperative Patent Classification (CPC):
**H04L 9/50; G06Q 20/02; G06Q 20/065;
G06Q 40/04;** G06Q 2220/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **nChain Licensing AG
6300 Zug (CH)**

(72) Inventor: **WRIGHT, Craig Steven
London W1W 8AP (GB)**

(74) Representative: **Page White Farrer
Bedford House
21a John Street
London WC1N 2BF (GB)**

(54) **COMPUTER-IMPLEMENTED METHODS AND SYSTEMS**

(57)    Embodiments of the disclosure provide solutions for facilitating exchanges of blockchain tokens between users. In a preferred embodiment a computing platform is provided which matches exchange-related instructions (orders) that are received from respective users. Each user establishes at least one payment channel with the platform and funds it with tokens of the type specified in their exchange-related instructions. When matching instructions are identified by the platform, the exchange is performed via the payment channels. A multi-party atomic swap can be used for implementing the token exchange, in which spending of a first transaction reveals a secret that can be used to spend a further transaction.

FIGURE 5

EP 4 629 150 A1

**Description**

TECHNICAL FIELD

The present disclosure provides improved tools and processes for secure transfer and exchange of digital assets. Embodiments are particularly suited for blockchain-implemented transfers and exchanges, especially transfers of blockchain-implemented tokens wherein the transfers are facilitated by a computing resource such as an exchange or other type of computing platform.

BACKGROUND

In recent years, blockchain technologies have become increasingly popular as vehicles for transferring and exchanging digital assets between parties, with growing interest in Decentralised Exchange (DEX) technologies. The assets that are exchanged are often called tokens and may take a variety of different forms depending on the protocol that is used to implement the blockchain.

Asset transfers are often facilitated by exchanges, which comprise computer-implemented platforms for buying, selling, storing and managing assets belonging to users that have registered with the exchange. For example, a decentralised token exchange (DEX) has been explored in "Application and evaluation of payment channel in hybrid decentralized ethereum token exchange", Xuan Luo et al, https://doi.org/10.1016/j.bcra.2020.100001.

However, users' assets are stored in a common pool at the exchange. As a result, significant disadvantages are known:

- while the underlying blockchain technologies themselves may be secure, the exchanges have proved to be vulnerable to security breaches. Numerous hacks and exploits are well documented. Therefore, if the exchange is compromised i.e. hacked, it is the users' assets that are stolen;
- it can be more difficult to track individual assets once they been pooled into a common storage facility. Therefore, proving ownership, integrity, provenance and transfer history becomes more challenging. Law enforcement and regulatory/official bodies may require evidence trails in the event of criminality, but passage through a common pool may erode transparency and auditability.

Thus, improved technical solutions for the secure storage, transfer and handling of digital assets are needed. Such solutions have now been devised.

SUMMARY

Embodiments of the present disclosure are described herein and defined in the appended set of claims.

Embodiments of the disclosure provide computer-implemented solutions which ensure the security of digital assets even when a resource that they are stored at or transferred through, such as an exchange, auction or other platform, is compromised. If the platform is hacked, it is only the platform that is affected, not users (i.e. the holders of the assets).

Additionally, or alternatively, embodiments also provide improved transparency, data generation, processing and availability in respect of transfers of digital assets. This facilitates auditability and provides means for tracing, tracking and verifying activities relating to digital assets.

Further still, embodiments may comprise novel mechanisms for ensuring fairness and reducing the possibility of unsuccessful or failed transfers for one or more parties. In preferred embodiments, these may comprise an improved multi-party atomic swap.

Therefore, in general, embodiments provide improved computing resources and processes for transferring, exchanging, storing and otherwise processing digital assets using a computing resource which we refer to as a 'platform'. Such a resource could comprise an exchange, trading platform, computer-implemented auction, and/or digital wallet.

Embodiments provide systems which enable a user to interact with a platform to establish an instruction (order) to perform a transfer/exchange or blockchain tokens. In a preferred embodiment, when the user places the instruction at the platform, the platform will identify a match for the first user's instruction with another user's instruction. The first user's instruction is essentially an instruction to the platform to find a match for a proposed token exchange which meets the first user's conditions. Preferably, upon placing their instructions at the platform, each user's assets are locked, prior to the exchange being performed. Thus, the match and token exchange are performed using locked assets that have been made available by the user in order to perform the exchange.

In order to perform the token transfer and lock the required tokens, each user establishes at least one payment channel with the platform. In one embodiment, a given user may establish a plurality of payment channels with the platform, each of the plurality being a payment channel for transferring tokens of a particular type (i.e. blockchain protocol). This enables the user to send/receive tokens for each token type in an independent manner.

In another embodiment, a given user may establish only one payment channel with the platform, the payment channel being arranged for transferring tokens of a particular type. In such an approach, the single payment channel may be used for only one 'leg' of an exchange i.e. to send (sell) or receive (buy).

Thus, in accordance with a preferred embodiment of the disclosure, a user (Alice) is able to establish an instruction with the platform. The instruction indicates a desire or intention to exchange one or more tokens. The platform identifies a match for Alice's instruction. Suppose that the match is with Bob. Alice's instruction may be fulfilled using a blockchain transaction that is signed by the parties - Alice, Bob and the platform. In the event that the platform is compromised by an unauthorised party, the only consequence to the exchanging parties is that they are prevented from concluding the token exchange. Alice and Bob do not lose their assets.

In one or more embodiments, Alice or Bob are able to impose one or more restrictions or limits on the exchange that they wish to make. These restrictions can be implemented using any suitable functionality available with the blockchain protocol that is being used. For example, a time lock mechanism may be used in accordance with certain blockchain protocols.

In the event that Alice or Bob is hacked, their assets are locked. Moreover, the platform has a record of all activities and is party to the token exchange. Therefore, security is improved because the attacker would need to compromise both the user and the platform in order to succeed.

In a preferred embodiment, the platform provides a matching facility which implements sequential ordering of token exchanges. In such an embodiment, the platform may assign a sequential number or other identifier to each instruction that it receives. Thus, a sequential record of instructions is maintained at the platform. This may be referred to as an orderbook. A (sequential) orderbook may be maintained by the platform for each user. This provides that advantage that evidence can be provided in the event of a query.

In one or more embodiments, the platform may maintain a record of timestamps for each token exchange.

BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,
Figure 2 schematically illustrates some examples of transactions which may be recorded in a blockchain,
Figure 3A is a schematic block diagram of a client application,
Figure 3B is a schematic mock-up of an example user interface that may be presented by the client application of Figure 3A,
Figure 4 is a schematic block diagram of some node software for processing transactions,
Figure 5 illustrates an embodiment of the disclosure in which a user establishes a single payment channel with the platform for a chosen blockchain protocol,
Figure 6 illustrates an embodiment of the disclosure in which a user establishes a payment channel with the platform for each token type that they wish to exchange.

DETAILED DESCRIPTION OF EMBODIMENTS

1. INVENTION SPECIFIC MATERIAL

Embodiments of the disclosure provide computer-implemented solutions that can take a variety of forms, including one or more of: methods, computer-based networks, apparatus comprising hardware, programs stored on suitable storage mediums and arranged for execution by one or more processors, software and/or firmware that is operative to implement the disclosed embodiments.

We now describe illustrative embodiments of the disclosure with reference to the accompanying figures. In our examples, payment channels are used in new ways to facilitate exchanges of blockchain tokens.

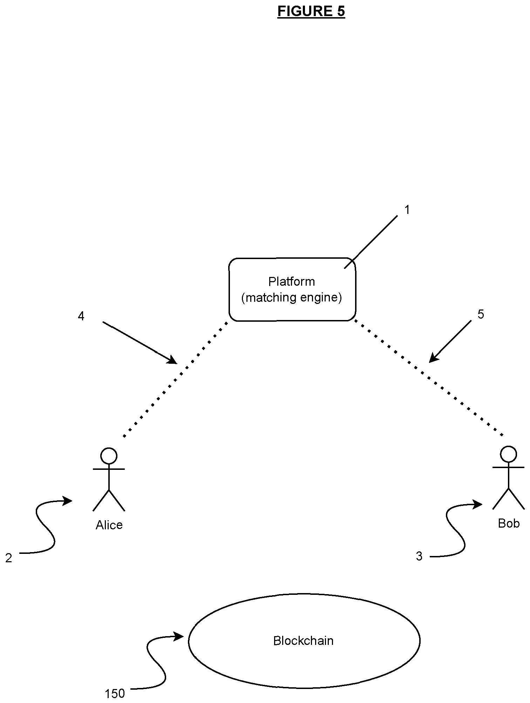

In our examples, and as illustrated in Figure 5, the token exchange is facilitated by a computing resource 1 that we refer to as a 'platform' 1. The platform 1 serves as an exchange or auction that provides a repository for information relating to blockchain token transfers/exchanges. It also serves as a resource where parties 2, 3 can transact with each other and access information about potential token exchanges.

In essence, the platform 1 provides a tool for matching and/or coordinating payment channels 4, 5 that are established with users 2, 3 who wish to transfer tokens, and ensures that the payment channels with the optimal offer succeeds. Instead of a peer-to-peer interaction between the user 2, 3 and the platform 1, embodiments use a peer-to-platform-to-peer approach, and thus implements a significantly different communication flow relative to known approaches.

Payment channels are known in the art of blockchain technologies and will be readily understood by the person skilled in the art. For example, the BitcoinSV wiki explains at https://wiki.bitcoinsv.io/index.php/Payment Channels that *"payment channels are a mechanism where two or more parties can directly exchange and update a [blockchain] transaction. The mechanism includes methods for establishing, or opening a payment channel, updating the payment channel and finalising, or closing, the payment channel. The mechanism also covers the possibility of any of the parties becoming unresponsive, usually by enabling the recovery of funds after a fixed time. Payment channels support extremely rapid transaction updates with only the final closing transaction being timestamped on the blockchain. Payment channels can be useful for streaming data, operating a sequence of events, or operating with a live dataset in applications such as gaming and more."*

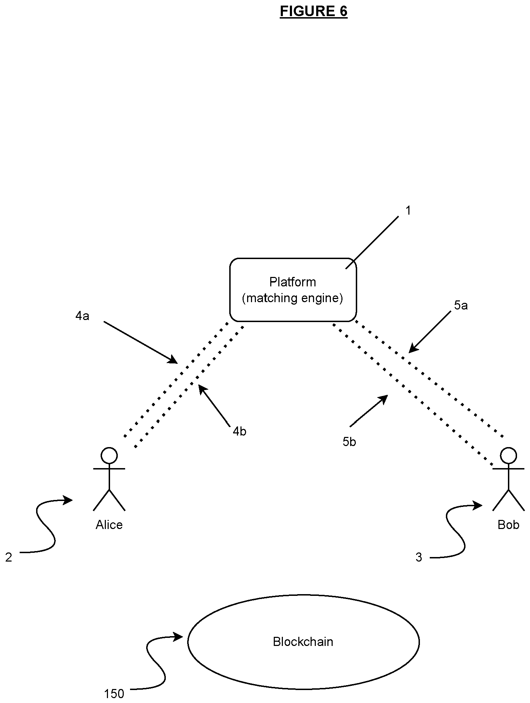

In a first example embodiment, shown in Figure 6, a payment channel 4,5 is set up between a user 2, 3 and the platform 1. A payment channel (4a, 4b and 5a, 5b) is established with the platform 1 per user, per blockchain token type. In other words, a given user, who we will call Alice 2 or Bob 3, could have three different payment channels established with the platform in order to perform transfers of three different types of tokens. Figure 6 shows Alice 2 having two payment channels 4a, 4b set up with the platform 1, and Bob 3 also having two payment channels 5a, 5b set up. However, the number of payment channels per user can vary according to the user's wishes.

In a second example embodiment, shown in Figure 5, a single payment channel 4, 5 is established between the user 2, 3 and the platform 1 for a chosen type of blockchain token. Settlement of the token exchange occurs on blockchains 150 associated with other types of tokens.

Each exchange instruction, which could be referred to as an 'order', has two legs: a 'buy' leg and a 'sell' leg. The first example embodiment uses payment channels for both legs, while the second example uses payment channels for only one of the two legs. Each embodiment provides different technical benefits, and can be selected according to the needs of a specific use case.

Although Figures 5 and 6 shown Alice and Bob adopting the same payment channel approach as each other, the skilled person will understand that they could choose different approaches from each other. In other words, Alice may choose to establish only one payment channel as per example approach 2, while Bob sets up multiple payments channels, one per token type, as per example approach 1, or vice versa.

As known in the art, there are many different types of known blockchain tokens, each associated with, and formed in accordance with, a respective blockchain protocol. For example, tokens such as Bitcoin BSV, Bitcoin BTC, Ethereum are widely known, although embodiments of the disclosure are not limited to use with any particular type of blockchain token/protocol. Therefore, in our illustrative examples, we will refer to the token types as Token1, Token?, Token 3 etc.

We now describe each of the above noted embodiments in more detail, followed by an explanation of how an order can be matched in accordance with embodiments of the disclosure.

Embodiment 1 - A payment Channel Per User, Per Blockchain Protocol

In accordance with our first example embodiment, and as illustrated in Figure 6, a first user who we call Alice 2 creates a payment channel 4a, 4b with an embodiment of the platform 1 for each blockchain token she would like to trade. For example, if Alice would like to trade 10 Token1 for 20 Token?, then Alice needs to send a request to setup a Token1 payment channel 4a and a Token2 payment channel 4b.

Alice then funds the Token1 payment channel 4a with 10 Token1 tokens, and the platform funds the Token2 payment channel 4b with 20 Token?. The date stamp of when the Token2 payment channel was set up can be recorded in a record e.g. a list maintained at the platform. This could be referred to as an orderbook. In a preferred embodiment, this list is sequential record that is arranged to also record timestamps, timings and relevant data for each entry (exchange) that is recorded in the list. Each new order from a user creates a new entry in the list. Thus, each time the user submits an instruction to the platform, it is recorded as the next entry in the sequential list. The list is indexed so that each entry is allocated an identifier e.g. a number or some other value from a sequence. An advantage of this sequential record is that evidence can be provided in the event of a dispute over an exchange made via the platform. The sequential ordering of timestamped exchanges provides an audit mechanism for proving all of the exchanges that have been made via the platform. If an auditing party asks the platform to provide evidence of the exchanges that it has facilitated, the platform can provide the full list and the sequential ordering verifies that no exchanges have been omitted from its list.

If Bob would like to trade 20 Token2 for 10 Token1, Bob sets up a Token2 payment channel with the platform. Once the payment channel $C_{Bob\text{-}Token2}$ is setup, the platform sets up the payment channel $C_{Alice\text{-}Token2}$.

At this point in time, the platform does not have 20 Token2 from Bob, therefore the Token2 required to fund $C_{Alice\text{-}Token2}$ is provided from the platform itself. While this increases costs for the platform to operate, it allows the two payment channels $C_{Bob\text{-}Token2}$ and $C_{Alice\text{-}Token2}$ to operate independently. This is advantageous because it may not be desirable to Alice or Bob that their payment channel settlement is dependent on a third party. Once both payment channels are settled or closed, the platform 's contribution is balanced to zero plus potential trading fees that the platform receives from Alice and Bob.

After the first trade, Alice and Bob will have the following account status as shown in Table 1:

| Payment Channel | Alice | Exchange | | Bob | Exchange |
|---|---|---|---|---|---|
| Token1 | 0 | 10 | | 10 | 0 |
| Token2 | 20 | 0 | | 0 | 20 |

Now consider a scenario in which Bob decides that he will not trade Token? tokens anymore. In this case, Bob can close his Token2 payment channel and settle the transaction "Bob pays the platform 20 Token?" on the Token2 blockchain. He does this by generating a suitably arranged blockchain transaction and submits it to the Token2 blockchain network to be added to the Token2 blockchain ledger.

Now consider a scenario in which Alice would like to trade 10 Token2 for 10 Token3, so she creates an allocation blockchain transaction that assigns 10 Token2 to the platform and 10 Token3 to herself. Once the platform is able to match the order, the platform sets up a Token3 payment channel with Alice which is funded by the platform with 10 Token3.

After the second trade, Alice and Bob will have the following account status as shown in Table 2:

| Payment Channel | Alice | Exchange | | Bob | Platform |
|---|---|---|---|---|---|
| Token1 | 0 | 10 | | 10 | 0 |
| Token2 | 10 | 10 | | Closed | |
| Token3 | 10 | 0 | | | |

Numerous technical benefits flow from such an approach:

1. each payment channel to operate independently. This means, for example, that closure of Alice's payment channel is not dependent on the payment channel between Bob and the platform;
2. This option only requires that a blockchain token to have payment channel capability i.e. the protocol that the token is native to provides for use of its tokens with payment channels. Many known blockchain tokens/protocols comprise payment channel functionalities.

Embodiment 2 - A payment Channel Per User, Per Chosen Blockchain Token/Protocol

In this approach, as illustrated in Figure 5, Alice creates a Token1 payment channel with the platform, so that she can use her Token1 tokens as the underlying currency to exchange blockchain tokens. The payment channel is used to reflect the balance of Token1 in Alice's account at the platform.

For example, Alice sets a payment channel with the platform, funding the payment channel using 100 Token1 tokens. Alice then generates and submits, to the platform, a buy order of 20 Token2 at 10 Token1. Assuming that Bob wants to sell 20 Token2 at 10 Token1, the platform facilitates a Token2 transaction from Bob to Alice and updates the payment channels accordingly. Note that Bob's payment channel requires a balance increase as Bob obtains more Token1 tokens by selling Token2.

The platform obtains 10 Token1 from Alice and is expected to give that to Bob. One way to achieve this is for the platform to pay 10 Token1 tokens into the funding address. However, this implies that the payment channel will have to manage at least two inputs in all future updates. Thus, a more efficient approach could be to close the payment channel and open it again with the platform contributing 10 Token1 to the funding transaction. In yet another approach, the platform may maintain Bob's payment channel without changing it and pay Bob 10 Token1 directly on chain after the Token2 transaction is confirmed or performed in an atomic swap. This is illustrated in Table 3:

| Token1 Payment Channel | Alice | Platform | | Bob | Platform |
|---|---|---|---|---|---|
| Funding | 100 | 0 | | 100 | 0 |
| After 1st exchange | 90 | 10 | | 110 | -10 |

A record of Bob sending 20 Token2 to Alice can also be recorded in the update of the allocation transactions in the respective payment channel.

Numerous technical benefits flow from such an approach:

1. only one payment channel per user is required. As a result, management of payment channels from both users and the platform are simplified and processing effort and resources are minimised.

2. There are no additional requirements on other blockchain tokens to be exchanged, which results in a more versatile arrangements that allows for a wide range of token types to be transferred.

Instruction Matching

We now provide a discussion of an alternative approach to instruction (order) matching that can be implemented at the platform so as to perform and/or facilitate an exchange of blockchain tokens between users. The term 'order matching' is known in the field of trading and exchanging e.g. on a stock market. A preferred embodiment of the disclosure may comprise an order matching system or 'matching engine' component.

As above, each instruction consists of two legs, buy and sell. An example is given in Table 4:

| Instruction 1 | Token Type | Amount |
|---|---|---|
| Buy Leg | Token1 | 10 |
| Sell Leg | Token2 | 20 |
| Rate | Token1: Token2 | 0.5 |

To match the instruction, the trading pair needs to be matched first (an alternative will be discussed below), followed by matching of the rate. After that, depending on whether the instruction can be partially fulfilled, the amount is to be matched. If the instruction is partially matched, then a new instruction (child instruction) is created to capture the remainder. An example is shown below in Table 5, indicating that the instruction has been partially fulfilled and the remainder is captured in a new instruction.

| Instruction 2 | Token Type | Amount |
|---|---|---|
| Buy Leg | Token1 | 2 |
| Sell Leg | Token2 | 4 |
| Rate | Token1: Token2 | 0.5 |

In some embodiments, an order can be matched leg by leg in a loop of multiple instructions. For example, Table 6 shows three instructions put forward by users Alice, Bob and Charlie.

| Instruction_Alice | Token Type | Amount |
|---|---|---|
| Buy Leg | Token1 | 10 |
| Sell Leg | Token2 | 20 |
| Rate | Token1: Token2 | 0.5 |

Table 7:

| Instruction_Bob | Token Type | Amount |
|---|---|---|
| Buy Leg | Token2 | 20 |
| Sell Leg | Token3 | 20 |
| Rate | Token2: Token3 | 1 |

Table 8:

| Instruction_Charlie | Token Type | Amount |
|---|---|---|
| Buy Leg | Token3 | 20 |

(continued)

| Instruction_Charlie | Token Type | Amount |
|---|---|---|
| Sell Leg | Token1 | 10 |
| Rate | Token3: Token1 | 2 |

If a pair-based order matching approach is used, no match will be made and therefore no exchange will occur. However, it is possible to proceed as follows, using three transfers:

- match the sell leg of Alice's order with the buy leg from Bob's instruction;
- then find a buy leg from Charlie's instruction to match Bob's sell leg;
- finally, close the loop by matching the sell leg from Charlie's instruction to the buy leg from Alice's instruction.

Exchange Using Atomic Swaps

In some embodiments, an atomic swap can be used to facilitate the exchange of tokens between Alice and Bob. As known in the art, the term 'atomic swap' is used to mean that an operation succeeds in its entirety, or it fails completely. In respect of the exchange of tokens, this means that Alice and Bob both obtain the token(s) that they want, or neither of them does. The exchange happens successfully, or neither party gets any tokens.

Consider a scenario in which Alice wishes to exchange 20 Token2 for 10 Token1 and Bob wishes to exchange 10 Token1 for 20 Token?. They have each submitted a respective exchange instruction at the platform indicating their desired exchange and any conditions that they want to impose on it. The platform matches the instructions. The purpose of the atomic swap is to ensure that without any interaction between Alice and Bob, either Alice receives 10 Token1 and Bob receives 20 Token2 or neither happens.

In accordance with an overview of one possible embodiment, a series of blockchain transactions is created in a way such that:

1. when one transaction is spent, a secret will be revealed to allow another to be spent; and
2. when one party cheats by sending an outdated transaction to the blockchain network, one of the other parties will be able to counter it by sending a newer version or a fallback transaction.

As the platform is able to facilitate exchanges of different types of blockchain tokens, a generic language is used to describe transactions in this section. The sequence of transactions does not necessarily reflect the sequence of creation and publication to the network. In the following, the standard notation 'TX' is used to mean 'blockchain transaction'.

TX1: Alice sends 20 Token2 to 2-2 MultiSig address (Alice and the platform must sign in order for the tokens to be transferred) [This is Alice's Deposit]

TX2: spends TX1, the platform adds its signature paying Alice 20 Token2 in 10 units of time. Alice keeps the transaction. [This is a Fallback transaction that can be used in the event of malicious action; when sent to the network, it implies that the sender is Alice.]

TX3: spends TX1, Alice adds her signature paying Alice 20 Token2 in 10 units of time. The platform keeps the transaction. [As with as TX2, when sent to the network, this implies that the sender is the platform.]

TX4 partial: spends TX1, Alice's signature implying to pay anyone in 11 units of time 20 Token2. [Instruction request.]

TX4 complete: spends TX1, the platform adds its signature confirming to pay Bob in 11 units of time 20 Token2 [Instruction matched.]

TX5: Bob sends 10 Token1 to 2-2 MultiSig ( i.e. Bob and the platform must sign in order to transfer the tokens) [This is Bob's payment.]

TX6: spends TX5, the platform adds its signature paying Bob 10 Token1 in 10 units of time. Bob keeps the transaction. [This is Bob's fallback TX that he can use in the event of malicious action; when sent to the network, this implies that the sender is Bob.]

TX7: spends TX5, Bob adds his signature paying Bob 10 Token1 in 10 units of time. The platform keeps the transaction. [This is the platform's fallback TX; when sent to the network, this implies that the sender is the platform.]

TX8 partial: spends TX5, Bob's signature implying to pay anyone in 11 units of time 10 Token1.

TX8 complete: spends TX5, the platform adds its signature confirming to pay Alice in 11 units of time 10 Token1.

If all goes well and no malicious action occurs, TX1, TX4, TX5 and TX8 will be published on on-chain. This implies that an exchange between Alice and Bob, 20 Token2 for 10 Token1, facilitated by the platform, is settled.

If Alice uses TX2 to cheat, then the platform or Bob can use TX7 or TX6 respectively to counter her actions. This effectively cancels the exchange in its entirety.

If Bob uses TX6 to cheat, then the platform or Alice can use TX3 or TX2 respectively to counter his actions. As before, this effectively cancels the exchange.

Even if the platform colludes with Alice, then Alice receives 10 Token1 in 11 units of time, and Bob does not receive 20 Token?. This implies that Alice or the platform is using TX2 or TX3 to obtain 20 Token2 in return. If that happens, then Bob can use TX6 to get his 10 Token1 back.

If the platform maliciously cancels the exchange using TX3 or TX7 for potentially more fees, then Alice or Bob will be able to observe it and evidently show that the platform is acting maliciously or dishonestly. This is because TX3 or TX7 can only be sent to the network by the platform. Note that, even when this happens, Alice or Bob can actively protect their assets by sending TX2 or TX6 respectively to the network.

If the platform is compromised i.e. hacked, the most vulnerable transactions are the partial transactions as they can be manipulated. However, for each partial transaction, there is a fallback transaction held by each user to override any unexpected use of those partial transactions. All other transactions are either held in 2-2 MultiSig, or with fixed outputs to the users. The attacker is not able to take any advantage even when they have total control over the platform. This provides a significant improvement on security compared to prior art exchanges or auctions.

We now provide an example of how one or more embodiments can be implemented using transaction templates.

<u>Blockchain Transaction Templates</u>

We now provide a list of transaction templates corresponding to the transactions mentioned above. A transaction template is a concept known in the art to the person skilled in blockchain technologies, and can be defined in one wording as a transaction that requires completion in order to comply with the protocol rules for a given blockchain network.

The transactions do not use any specific features of blockchain protocols and the embodiments can be generalised for use with any blockchain/protocol/token type. In a preferred embodiment, the protocol supports 2-2 MultiSig and Locktime (or some functionality that enables a transaction to be restricted such that tokens can only be spent after a certain period of time or in a future date). Data payload is optional.

TX1: As shown in Table 9, Alice keeps this transaction to herself until she receives partially signed TX2 from the platform.

| $TX^{deposit}_{Alice-Token2}$ | | | |
|---|---|---|---|
| Locktime | | 0 | |
| Input | | Output | |
| Alice's input | $Sig_{Alice}$ | 20 Token2 | 2-2 MultiSig (Alice and platform) |

TX2: As shown in Table 10, Alice asks for a partially signed fallback transaction from the platform. The transaction can be completed by Alice signing the transaction. After receiving this partial transaction, Alice publishes TX1.

| $TX^{fallback}_{Alice-Token2}$ | | | | |
|---|---|---|---|---|
| Locktime | | | 10 | |
| Input | | | Output | |
| $TX^{deposit}_{Alice-Token2}||0$ | $Sig_{platform}$ | | 20 Token2 | Alice |

TX3: As shown in Table 11, Alice also sends a partially signed fallback transaction to the platform. The transaction has the same effect as TX2, but it is used to distinguish the sender when a fallback transaction is needed.

| $TX^{fallback-ex}_{Alice-Token2}$ | | | | |
|---|---|---|---|---|
| Locktime | | | 10 | |
| Input | | | Output | |
| $TX^{deposit}_{Alice-Token2}||0$ | $Sig_{Alice}$ | | 20 Token2 | Alice |

TX4 partial: As shown in Table 12, Alice makes an order by sending a transaction that allows the platform to add an output. This represents the sell leg of the transaction. The buy leg can be communicated with the platform in a data payload in this transaction. Any other means of communicating the buy leg with the platform can be used.

| $TX_{Alice\text{-}sell}$ | | | | |
|---|---|---|---|---|
| Locktime | | 11 | | |
| Input | | Ou-tput | | |
| $TX^{deposit}_{Alice-Token2}||0$ | $Sig_{Alice}$ | 20 To-ke-n2 | To-be-added | |
| | | Data payload: buy leg: 10 Token1, Alice's payment address | | |

TX4 complete: As shown in Table 13, the platform matches Alice's order with Bob's. This transaction represents the sell leg from Alice's order and the buy leg from Bob's order. The platform only needs to add Bob's address to the output of this transaction and signs the transaction to finalise it.

| $TX_{Alice\text{-}sell}$ | | | | |
|---|---|---|---|---|
| Locktime | | 11 | | |
| Input | | Ou-tput | | |
| $TX^{deposit}_{Alice-Token2}||0$ | $Sig_{Alice}$ $Sig_{platform}$ | 20 To-ke-n2 | Bob | |
| | | Data payload: buy leg: 10 Token1, Alice's payment address | | |

Similarly, on Bob's side, we have the following.

TX5: As shown in table 14, Bob keeps this transaction to himself until he receives partially signed TX6 from the platform.

| $TX^{deposit}_{Bob-Token1}$ | | | |
|---|---|---|---|
| Locktime | | 0 | |
| Input | | Output | |
| Bob's input | $Sig_{Bob}$ | 10 Token1 | 2-2 MultiSig (Bob and platform) |

TX6: As shown in Table 15, Bob asks for a partially signed fallback transaction from the platform. The transaction can be completed by Bob signing the transaction. After receiving this partial transaction, Bob publishes TX5.

| $TX^{fallback}_{Bob-\text{Token}1}$ | | | |
|---|---|---|---|
| Locktime | | 10 | |
| Input | | Output | |
| $TX^{deposit}_{Bob-Token1}$ | $Sig_{exchange}$ | 10 Token1 | Bob |

TX7: As shown in table 16, Bob also sends a partially signed fallback transaction to the platform. The transaction has the same effect as TX2, but it is used to distinguish the sender when a fallback transaction is needed.

| $TX^{fallback-ex}_{Bob-\text{Token}1}$ | | | |
|---|---|---|---|
| Locktime | | 10 | |
| Input | | Output | |
| $TX^{deposit}_{Bob-\text{Token}1}\|\|0$ | $Sig_{Bob}$ | 20 Token2 | Bob |

TX8 partial: Bob makes an order by sending a transaction that allows the platform to add an output. This represents the sell leg of the transaction. The buy leg can be communicated with the platform in a data payload in this transaction. However, any other means of communicating the buy leg with the platform can be used with one or more embodiments:

| $TX_{Bob\text{-}sell}$ | | | |
|---|---|---|---|
| Locktime | | 11 | |
| Input | | Output | |
| $TX^{deposit}_{Bob-\text{Token}1}\|\|0$ | $Sig_{Bob}$ | 10 Token1 | To-be-added |
| | | Data payload: buy leg: 20 Token2, Bob's address | |

TX8 complete: The platform matches Bob's order with Alice's. This transaction represents the sell leg from Bob's order and the buy leg from Alice's order. The platform only needs to add Alice's address to the output of this transaction and signs the transaction to finalise it.

| $TX_{Bob\text{-}sell}$ | | | |
|---|---|---|---|
| Locktime | | 11 | |
| Input | | Output | |
| $TX_{Bob-\texttt{Token1}}^{deposit}\|0$ | $Sig_{Bob}$ $Sig_{platform}$ | 10 Token1 | Alice |
| | | Data payload: buy leg: 20 Token2, Bob's address | |

## 2. TERMINOLOGY

Herein, when we use the verbs 'transfer' and 'exchange' interchangeably. The term 'transfer' is intended to cover and include 'exchange' and vice versa. Therefore, both terms may be interpreted as meaning a situation in which one or more tokens are sent from a sending party to a receiving party, and also situations where assets are exchanged in both directions between parties.

The noun 'exchange' may be used interchangeably herein with 'computing resource' 'platform' 'trading platform', 'auction', and/or 'exchange facilitator'.

The term 'token' may mean a blockchain token that is native to (i.e. formed in association with) a particular blockchain protocol. In such cases, the term 'token' may mean 'currency'. Additionally, or alternatively, the term may mean non-native tokens that are stored or carried via blockchain transactions e.g. non-fungible tokens (NFTs) or other forms of electronic assets that are transferred via, or referenced from, metadata within blockchain transactions.

The term 'user' may mean one or more human individuals and/or a computing-based resource that is operated by, or on behalf of, one or more human individuals.

The term 'order' as used herein may be interpreted as meaning 'an exchange/transfer instruction', and/or 'an indication of a desire/intention to perform a transfer/exchange'.

## 3. EXAMPLE SYSTEM OVERVIEW

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions.

Coin base transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example, blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

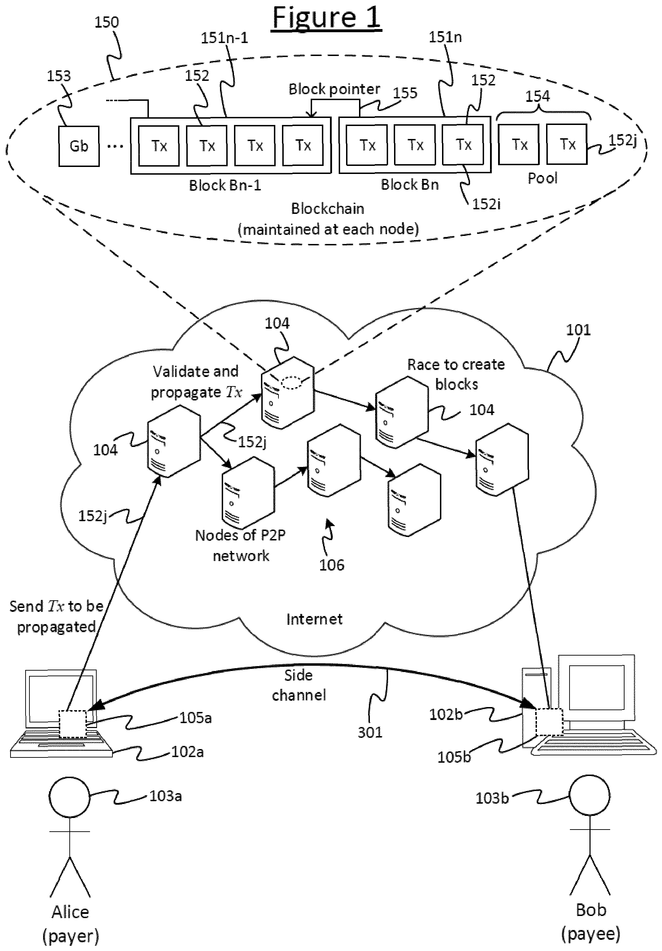

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 (often referred to as "miners") that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout.

A blockchain node 104 may be configured to forward transactions 152 to other blockchain nodes 104, and thereby cause transactions 152 to be propagated throughout the network 106. A blockchain node 104 may be configured to create blocks 151 and to store a respective copy of the same blockchain 150 in their respective memory. A blockchain node 104 may also maintain an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. Spending or redeeming does not necessarily imply transfer of a financial asset, though that is certainly one common application. More generally spending could be described as consuming the output, or assigning it to one or more outputs in another, onward transaction. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Any given blockchain node may be configured to perform one or more of the following operations: validating transactions, storing transactions, propagating transactions to other peers, performing consensus (e.g. proof-of-work) / mining operations. In some examples, each type of operation is performed by a different node 104. That is, nodes may specialise in particular operation. For example, a nodes 104 may focus on transaction validation and propagation, or on block mining. In some examples, a blockchain node 104 may perform more than one of these operations in parallel. Any reference to a blockchain node 104 may refer to an entity that is configured to perform at least one of these operations.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position" or "nonce"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

Some account-based transaction models share several similarities with the output-based transaction model described herein. For example, as mentioned above, the data field of an account-based transaction may point back to a previous transaction, which is equivalent to the input of an output-based transaction which references an outpoint a previous transaction. Thus both models enable linking between transactions. As another example, an account-based transaction contains a "recipient" field (in which a receiving address of an account is specified) and a "value" field (in which an amount of digital asset may be specified). Together the recipient and value fields are equivalent to the output of an output-based transaction which may be used to assign an amount of digital asset to a blockchain address. Similarly, an account-based transaction has a "signature" field which includes a signature for the transaction. The signature is generated using the sender's private key and confirms the sender has authorized this transaction. This is equivalent to an input / unlocking script of an output-based transaction which, typically, includes a signature for the transaction. When both types of transaction are submitted to their respective blockchain networks, the signatures are checked to determine whether the transaction is valid and can be recorded on the blockchain. On an account-based blockchain, a "smart contact" refers to a transaction that contains a script configured to perform one or more actions (e.g. send or "release" a digital asset to a recipient address) in response to one or more inputs (provided by a transaction) meeting one or more conditions defined by the smart contact's script. The smart contract exists as a transaction on the blockchain, and can be called (or triggered) by subsequent transactions. Thus, in some examples, a smart contract may be considered equivalent to a locking script of an output-based transaction, which can be triggered by a subsequent transaction, and checks whether one or more conditions defined by the locking script are met by the input of the subsequent transaction.

## 4. UTXO-BASED MODEL

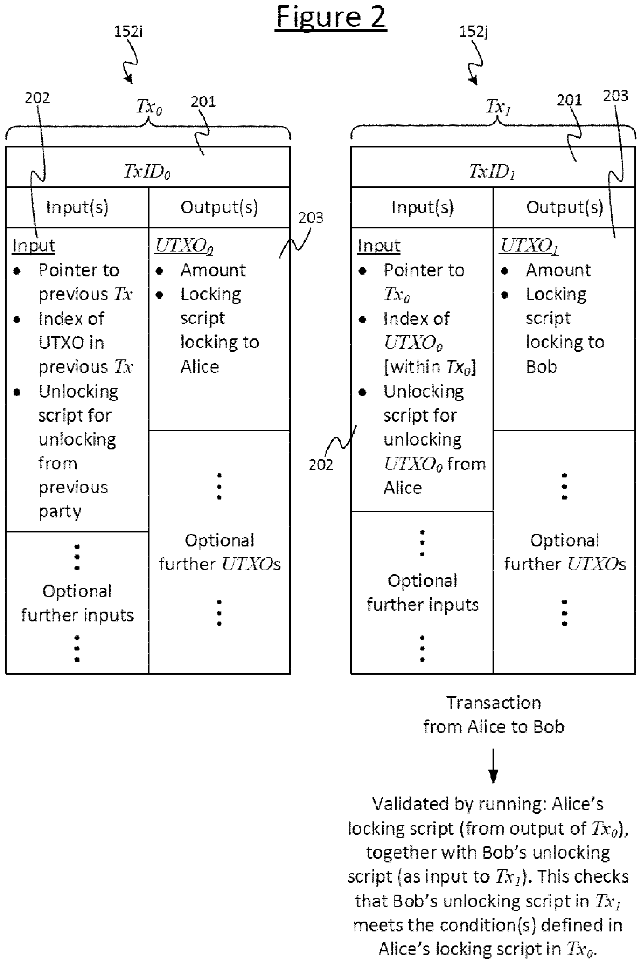

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled *"Tx$_1$"*. It takes an amount of the digital asset that is locked to Alice in the output 203 of a preceding transaction 152i in the sequence, and transfers at least some of this to Bob. The preceding transaction 152i is labelled *"Tx$_0$"* in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ comprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Locking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ comprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig Pa] contains a representation (i.e. a hash) of the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This comprises running the locking script and unlocking script together to check whether the unlocking script meets the condition defined in the locking script (where this condition may comprise one or more criteria).

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

## 5. SIDE CHANNEL

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

## 6. CLIENT SOFTWARE

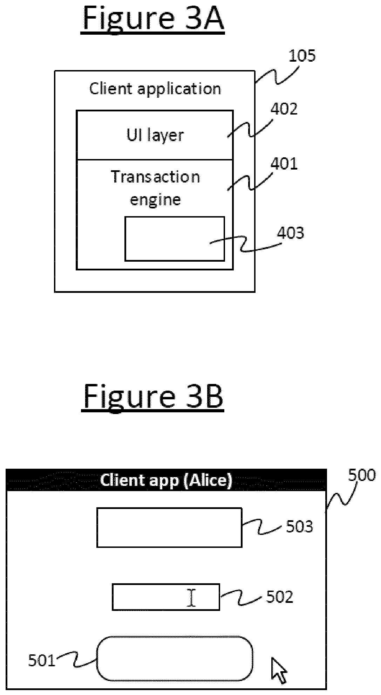

Figure 3A illustrates an example implementation of the client application 105 for implementing embodiments of the presently disclosed scheme. The client application 105 comprises a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the schemes discussed above and as discussed in further detail shortly.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could comprise one or more display screens (touch or non-touch screen) for providing a visual output, one or more speakers for providing an audio output, and/or one or more haptic output devices for providing a tactile output, etc. The user input means could comprise for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note: whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may comprise one or more UI elements 501, 502, 502 rendered as distinct UI elements via the user output means.

For example, the UI elements may comprise one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may comprise one or more data entry fields 502, through which the user can ... These data entry fields are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may comprise one or more information elements 503 output to output information to the user. E.g. this/these could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3 is only a schematized mock-up and in practice it may comprise one or more further UI elements, which for conciseness are not illustrated.

## 7. NODE SOFTWARE

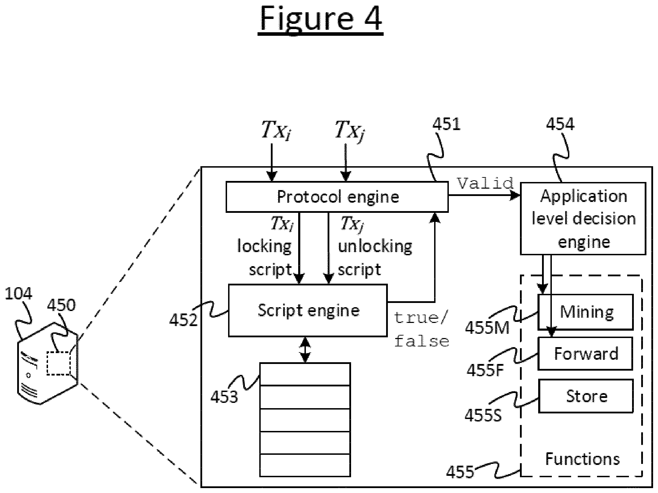

Figure 4 illustrates an example of the node software 450 that is run on each blockchain node 104 of the network 106, in the example of a UTXO- or output-based model. Note that another entity may run node software 450 without being classed as a node 104 on the network 106, i.e. without performing the actions required of a node 104. The node software 450 may contain, but is not limited to, a protocol engine 451, a script engine 452, a stack 453, an application-level decision engine 454, and a set of one or more blockchain-related functional modules 455. Each node 104 may run node software that contains one or more of: a consensus module 455C (for example, proof-of-work), a propagation module 455P and a storage module 455S (for example, a database). The consensus module 455C may contain a validation module (not shown) configured to validate transactions according to the blockchain protocol. The validation module may instead be separate from the consensus module 455C. One or more of the modules may operate in parallel. A node 104 may contain additional modules. The protocol engine 401 is typically configured to recognize the different fields of a transaction 152 and process them in accordance with the node protocol. When a transaction 152j ($Tx_j$) is received having an input pointing to an output (e.g. UTXO) of another, preceding transaction 152i ($Tx_{m-1}$), then the protocol engine 451 identifies the unlocking script in $Tx_j$ and passes it to the script engine 452. The protocol engine 451 also identifies and retrieves $Tx_i$ based on the pointer in the input of $Tx_j$. $Tx_i$ may be published on the blockchain 150, in which case the protocol engine may retrieve $Tx_i$ from a copy of a block 151 of the blockchain 150 stored at the node 104. Alternatively, $Tx_i$ may yet to have been published on the blockchain 150. In that case, the protocol engine 451 may retrieve $Tx_i$ from the ordered set 154 of unpublished transactions maintained by the node104. Either way, the script engine 451 identifies the locking script in the referenced output of $Tx_i$ and passes this to the script engine 452.

The script engine 452 thus has the locking script of $Tx_i$ and the unlocking script from the corresponding input of $Tx_j$. For example, transactions labelled $Tx_0$ and $Tx_1$ are illustrated in Figure 2, but the same could apply for any pair of transactions. The script engine 452 runs the two scripts together as discussed previously, which will include placing data onto and retrieving data from the stack 453 in accordance with the stack-based scripting language being used (e.g. Script).

By running the scripts together, the script engine 452 determines whether or not the unlocking script meets the one or more criteria defined in the locking script - i.e. does it "unlock" the output in which the locking script is included? The script engine 452 returns a result of this determination to the protocol engine 451. If the script engine 452 determines that the unlocking script does meet the one or more criteria specified in the corresponding locking script, then it returns the result "true". Otherwise it returns the result "false".

In an output-based model, the result "true" from the script engine 452 is one of the conditions for validity of the transaction. Typically there are also one or more further, protocol-level conditions evaluated by the protocol engine 451 that must be met as well; such as that the total amount of digital asset specified in the output(s) of $Tx_j$ does not exceed the total amount pointed to by its inputs, and that the pointed-to output of $Tx_i$ has not already been spent by another valid transaction. The protocol engine 451 evaluates the result from the script engine 452 together with the one or more protocol-level conditions, and only if they are all true does it validate the transaction $Tx_j$. The protocol engine 451 outputs an indication of whether the transaction is valid to the application-level decision engine 454. Only on condition that $Tx_j$ is indeed validated, the decision engine 454 may select to control both of the consensus module 455C and the propagation module 455P to perform their respective blockchain-related function in respect of $Tx_j$. This comprises the consensus module 455C adding $Tx_j$ to the node's respective ordered set of transactions 154 for incorporating in a block 151, and the propagation module 455P forwarding $Tx_j$ to another blockchain node 104 in the network 106. Optionally, in embodiments the application-level decision engine 454 may apply one or more additional conditions before triggering either or both of these functions. E.g. the decision engine may only select to publish the transaction on condition that the transaction is both valid and leaves enough of a transaction fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model, a result of "true" could be indicated by a combination of an implicit, protocol-level validation of a signature and an additional affirmative output of a smart contract (the overall result being deemed to signal true if both individual outcomes are true).

## 8. FURTHER REMARKS

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

Some embodiments have been described in terms of the blockchain network implementing a proof-of-work consensus mechanism to secure the underlying blockchain. However proof-of-work is just one type of consensus mechanism and in general embodiments may use any type of suitable consensus mechanism such as, for example, proof-of-stake, delegated proof-of-stake, proof-of-capacity, or proof-of-elapsed time. As a particular example, proof-of-stake uses a randomized process to determine which blockchain node 104 is given the opportunity to produce the next block 151. The chosen node is often referred to as a validator. Blockchain nodes can lock up their tokens for a certain time in order to have the chance of becoming a validator. Generally, the node who locks the biggest stake for the longest period of time has the best chance of becoming the next validator.

It will be appreciated that the above embodiments have been described by way of example only. More generally there may be provided a method, apparatus or program in accordance with any one or more of the following Enumerated Statements.

## 9. ENUMERATED STATEMENTS:

Embodiments of the disclosure may provide computer-implemented methods and corresponding systems. These may enable or embody the implementation of a computer-based platform (system). The platform may be referred to as an exchange, auction or trading platform, or an order matching system. Such a system may comprise an order book that is generated, maintained, stored, updated and/or otherwise processed at, by or on the system. The order book may comprise a sequential list of orders from users and related data. Additionally, or alternatively, the system may comprise an order (instruction) matching component which could alternatively be referred to as a matching engine.

Methods and system of preferred embodiments may comprise the establishment of one or more payment channels between the platform and a given user. In some embodiments, multiple payment channels may be established between the given user and the platform. In other embodiments, only one payment channel may be established between the platform and a given user. Each/the payment channel enables a transfer of one or more blockchain tokens of a given type, the type being specified by a particular blockchain protocol that is associated with a corresponding blockchain network and blockchain ledger.

Exchange of the blockchain token(s) may be performed using one or more blockchain transactions. These may implement an atomic swap, in which the spending of one transaction (or output of the transaction) causes a secret to be revealed which, in turn, enables at least one further transaction (or output) to be spent. The term 'spent' means that that control of one or more tokens is transferred from an output of one blockchain transaction to the input of another. The atomic swap may comprise a multi-party atomic swap substantially as described herein.

Statement 1. A computer-implemented method for facilitating the exchange of blockchain tokens between a first user and a second user, the method comprising:

identifying matching instructions received from the first user and the second user, each instruction comprising data relating to a desired exchange of one or more blockchain tokens;

using at least one payment channel with each of the first and second users to facilitate the exchange of blockchain tokens between them in accordance with the matching instructions.

Statement 2. A method according to Statement 1, wherein the steps are performed by a computing platform that the first and second users are registered with.

Statement 3. A method according to Statement 2, wherein the at least one payment channel is established with the platform by the first and second users respectively.

Statement 4. A method according to any preceding Statement, wherein a plurality of payment channels is established with the first and/or second user, each payment channel in the plurality being associated with a different type of blockchain token.

Statement 5. A method according to any preceding Statement, wherein one payment channel is established with the first and/or second user, wherein the payment channel is associated with a predetermined type of blockchain token.

Statement 6. A method according to any preceding Statement, and comprising the step of maintaining a sequential list of records for each of the first and second users, each record comprising data relating to an instruction received from the first user or second user.

Statement 7. A method according to any preceding Statement, wherein the exchange of blockchain tokens is performed using an atomic swap.

Statement 8. A method according to Statement 7, wherein the atomic swap comprises revealing a secret when a first blockchain transaction is spent, and the secret enables a further transaction to be spent.

Statement 9. A method according to any preceding Statement, wherein the at least one payment channel is established by the first and second users respectively.

Statement 10. A method according to any preceding Statement, wherein the exchange of blockchain tokens comprises updating the at least one payment channel with the first user and the at least one payment channel with the second user.

Statement 11. A method according to any preceding Statement, wherein each of the first and second users provide one or more blockchain tokens to a respective one or more of the at least one payment channels.

Statement 12. A method according to any preceding Statement, wherein the exchange of blockchain tokens is controlled or influenced by a time locking mechanism that specifies when one or more of the at least one payment channels will be updated.

Statement 13. A computer implemented system arranged to perform the steps of any preceding Statement method, and comprising an instruction matching component operative to identify the matching instructions.

Statement 14. Computer equipment comprising:

memory comprising one or more memory units; and

processing apparatus comprising one or more processing units, wherein the memory stores code arranged to run on the processing apparatus, the code being configured so as when on the processing apparatus to perform the method of any of Statement 1 to 12.

Statement 15. A computer program embodied on computer-readable storage and configured so as, when run on one or more processors, to perform the method of any of Statement 1 to 12.

**Claims**

1. A computer-implemented method for facilitating the exchange of blockchain tokens between a first user and a second user, the method comprising:

identifying matching instructions received from the first user and the second user, each instruction comprising data relating to a desired exchange of one or more blockchain tokens;

using at least one payment channel with each of the first and second users to facilitate the exchange of blockchain tokens between them in accordance with the matching instructions.

2. A method according to claim 1, wherein the steps are performed by a computing platform that the first and second users are registered with.

3. A method according to claim 2, wherein the at least one payment channel is established with the computing platform by the first and second users respectively.

4. A method according to any preceding claim, wherein a plurality of payment channels is established with the first and/or second user, each payment channel in the plurality being associated with a different type of blockchain token.

5. A method according to any preceding claim, wherein one payment channel is established with the first and/or second user, wherein the payment channel is associated with a predetermined type of blockchain token.

6. A method according to any preceding claim, and comprising the step of maintaining a sequential list of records for each of the first and second users, each record comprising data relating to an instruction received from the first user or second user.

7. A method according to any preceding claim, wherein performance of the exchange of blockchain tokens comprises an atomic swap.

8. A method according to claim 7, wherein the atomic swap comprises revealing a secret when a first blockchain transaction is spent, and the secret enables a further transaction to be spent.

9. A method according to any preceding claim, wherein the at least one payment channel is established by the first and second users respectively.

10. A method according to any preceding claim, wherein the exchange of blockchain tokens comprises updating the at least one payment channel with the first user and the at least one payment channel with the second user.

11. A method according to any preceding claim, wherein each of the first and second users provide one or more blockchain tokens to a respective one or more of the at least one payment channels.

12. . A method according to any preceding claim, wherein the exchange of blockchain tokens is controlled or influenced by a time locking mechanism that specifies when one or more of the at least one payment channels will be updated.

13. A computer implemented system arranged to perform the steps of any preceding method, and comprising an instruction matching component operative to identify the matching instructions.

14. Computer equipment comprising:

   memory comprising one or more memory units; and
   processing apparatus comprising one or more processing units, wherein the memory stores code arranged to run on the processing apparatus, the code being configured so as when on the processing apparatus to perform the method of any of claims 1 to 12.

15. A computer program embodied on computer-readable storage and configured so as, when run on one or more processors, to perform the method of any of claims 1 to 12.

Figure 1

# Figure 2

152i

152j

202

$Tx_0$   201

$Tx_1$   201   203

| TxID<sub>0</sub> | | |
|---|---|---|

| Input(s) | Output(s) | |
|---|---|---|
| Input<br>• Pointer to previous $Tx$<br>• Index of UTXO in previous $Tx$<br>• Unlocking script for unlocking from previous party<br><br>⋮<br><br>Optional further inputs<br>⋮ | $UTXO_0$<br>• Amount<br>• Locking script locking to Alice<br><br><br>⋮<br><br>Optional further $UTXO$s<br><br>⋮ | 203 |

203

202

| $TxID_1$ | |
|---|---|

| Input(s) | Output(s) |
|---|---|
| Input<br>• Pointer to $Tx_0$<br>• Index of $UTXO_0$ [within $Tx_0$]<br>• Unlocking script for unlocking $UTXO_0$ from Alice<br><br>⋮<br><br>Optional further inputs<br>⋮ | $UTXO_1$<br>• Amount<br>• Locking script locking to Bob<br><br>⋮<br><br>Optional further $UTXO$s<br><br>⋮ |

Transaction
from Alice to Bob

Validated by running: Alice's locking script (from output of $Tx_0$), together with Bob's unlocking script (as input to $Tx_1$). This checks that Bob's unlocking script in $Tx_1$ meets the condition(s) defined in Alice's locking script in $Tx_0$.

# Figure 3A

105

Client application

402

UI layer

401

Transaction
engine

403

# Figure 3B

Client app (Alice)

500

503

502

501

# Figure 4

**FIGURE 5**

**FIGURE 6**

| | Europäisches Patentamt European Patent Office Office européen des brevets | **EUROPEAN SEARCH REPORT** | **Application Number** EP 24 16 8837 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/398116 A1 (FANG HUI [CN] ET AL) 23 December 2021 (2021-12-23) * abstract; claims 1-27; figures 1-8C * * paragraphs [0007] - [0069], [0085] - [0278] * | 1-15 | INV. G06Q20/02 G06Q20/06 H04L9/00 |
| X | WO 2021/046494 A1 (BOSONIC INC [US]) 11 March 2021 (2021-03-11) * abstract; claims 1-20; figures 1B-39 * * paragraphs [0002], [0060] - [0326] * | 1-15 | |
| X | MAHDI H MIRAZ ET AL: "Atomic Cross-chain Swaps: Development, Trajectory and Potential of Non-monetary Digital Token Swap Facilities", ANNALS OF EMERGING TECHNOLOGIES IN COMPUTING (AETIC),, vol. 3, no. 1, 1 January 2019 (2019-01-01) , pages 42-50, XP081019318, ISSN: 2516-0281, DOI: 10.33166/AETIC.2019.01.005 * the whole document * | 1-15 | |
| X | GIULIA SCAFFINO ET AL: "Alba: The Dawn of Scalable Bridges for Blockchains", IACR, INTERNATIONAL ASSOCIATION FOR CRYPTOLOGIC RESEARCH , vol. 20240209:143800 9 February 2024 (2024-02-09), pages 1-32, XP061084963, Retrieved from the Internet: URL:https://eprint.iacr.org/archive/2024/197/1707489480.pdf [retrieved on 2024-02-12] * the whole document * | 1-15 | TECHNICAL FIELDS SEARCHED (IPC) G06Q G07G H04L |

-/--

The present search report has been drawn up for all claims

| Place of search | Date of completion of the search | Examiner |
|---|---|---|
| The Hague | 23 July 2024 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 16 8837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAO LING ET AL: "Blockchain cross-chain protocol and platform research and development", 2021 INTERNATIONAL CONFERENCE ON ELECTRONICS, CIRCUITS AND INFORMATION ENGINEERING (ECIE), IEEE, 22 January 2021 (2021-01-22), pages 264-269, XP033904200, DOI: 10.1109/ECIE52353.2021.00063 [retrieved on 2021-04-12] * the whole document * | 1-15 | |
| X | IVAN HOMOLIAK ET AL: "The Security Reference Architecture for Blockchains: Towards a Standardized Model for Studying Vulnerabilities, Threats, and Defenses", ARXIV.ORG, CORNELL UNIVERSITY LIBRARY, 201 OLIN LIBRARY CORNELL UNIVERSITY ITHACA, NY 14853, 28 October 2020 (2020-10-28), XP081802029, DOI: 10.1109/COMST.2020.3033665 * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 23 July 2024 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 16 8837

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | Publication date | Patent family member(s) | | Publication date |
|---|---|---|---|---|
| US 2021398116 A1 | 23-12-2021 | CN | 113568946 A | 29-10-2021 |
| | | EP | 3933642 A1 | 05-01-2022 |
| | | SG | 10202006466Y A | 28-05-2021 |
| | | US | 2021398116 A1 | 23-12-2021 |
| WO 2021046494 A1 | 11-03-2021 | AU | 2020341824 A1 | 24-03-2022 |
| | | BR | 112022003989 A2 | 31-05-2022 |
| | | CA | 3149850 A1 | 11-03-2021 |
| | | CN | 115136168 A | 30-09-2022 |
| | | EP | 4014187 A1 | 22-06-2022 |
| | | JP | 2022547130 A | 10-11-2022 |
| | | US | 2021073913 A1 | 11-03-2021 |
| | | WO | 2021046494 A1 | 11-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XUAN LUO et al.** *Application and evaluation of payment channel in hybrid decentralized ethereum token exchange*, https://doi.org/10.1016/j.bcra.2020.100001